# EUROPÄISCHE PATENTANMELDUNG

(11) **EP 0 696 151 A2**
(43) Veröffentlichungstag der Anmeldung: **07.02.1996**
(21) Anmeldenummer: 95111902.3
(22) Anmeldetag: 28.07.1995
(51) Int. Cl.: H04Q 7/36, H04Q 7/34, H04M 1/72, H04B 17/00

(54) **Vorrichtung zum Bestimmen das Montageplatzes einer Basisstation**

(30) Priorität: 05.08.1994 CH 2449/94
(71) Anmelder: ASCOM BUSINESS SYSTEMS AG, CH-4503 Solothurn (CH)
(72) Erfinder: Mosimann, Dieter, CH-4573 Lohn-Ammansegg (CH); Zumoberhaus, Reto, CH-4512 Bellach (CH)
(74) Vertreter: Schwerdtel, Eberhard, Dr.

(57) **Zusammenfassung**

Um den optimalen Montageplatz für eine (oder zwei) Basisstationen eines zu installierenden Systems digitaler Schnurlostelefone zu finden, werden zwei Feststationen (21, 22) und eine Mobilstation (24) eingesetzt. Die Feststationen (21, 22) werden dabei quasi-stationär im Bereich des gesuchten Montageplatzes angeordnet, z.B. in zwei verschiedenen Räumen (15) eines Gebäudes (11). Der Abstand beträgt dabei 10 bis zu 200 m. Von der frei verschiebbaren Mobilstation (24) aus werden laufend Verbindungstests mit den Feststationen (21, 22) durchgeführt (Pfeile 26). Hierdurch lassen sich von diversen möglichen Standorten aus die jeweiligen Qualitätsbedingungen der Funkverbindungen vergleichend ermitteln. Dies ergibt einen Überblick über die guten und die ungeeigneten Funkbereiche im Gebäude (11) und/oder über die Überlappungsbereiche der parallelen Funkverbindungen. Hieraus ist der gesuchte optimale Montageplatz leicht ermittelbar.

## Beschreibung

Die Erfindung betrifft eine Vorrichtung zum Bestimmen eines optimalen Montageplatzes für die Basisstation eines zu installierenden Systems digitaler Schnurlostelefone entsprechend dem Oberbegriff von Anspruch 1.

Systeme digitaler Schnurlostelefone sind bekannt, beispielsweise solche, die nach der DECT-Norm (Digital European Cordless Telecommunication) arbeiten. Bei einem solchen System verkehrt eine an das allgemeine Vermittlungs- und Übertragungsnetz angeschlossene Basisstation über Funkkanäle mit einer Mehrzahl zugeordneter Handgeräte, die durch die benutzenden Personen im Arbeitsbereich des Systems frei verschiebbar sind. Die Funkkanäle werden jeweils und von Fall zu Fall aus einem Paar von insgesamt zweimal zwölf Zeitschlitzen und einer von zehn Übertragungsfrequenzen nach einem speziellen Prozedere aufgebaut.

Die Grösse des Arbeitsbereiches eines solchen Systems hängt wesentlich von der geschickten Wahl des Installations-Standortes für die Basisstation ab. Hierbei ist jedoch der optimale Montageplatz durchaus nicht immer ohne weiteres festlegbar. Vielmehr hängt der zu wählende Standort von mancherlei Parametern ab, wie z.B. von der Lage von Wänden, von metallischen Armierungen, von elektronischen Störquellen, von ästhetischen Gesichtspunkten usw.

Es ist die Aufgabe der Erfindung, eine Methode anzugeben, wie bei einer vorgesehenen Systeminstallation von Schnurlostelefonen auf möglichst einfache Art der optimale Montageplatz für die zugehörige Basisstation bzw. für die Basisstationen herausfindbar ist.

Die Lösung dieser Aufgabe ist durch den kennzeichnenden Teil von Anspruch 1 gegeben. Die abhängigen Ansprüche geben Ausgestaltungen der Erfindung an.

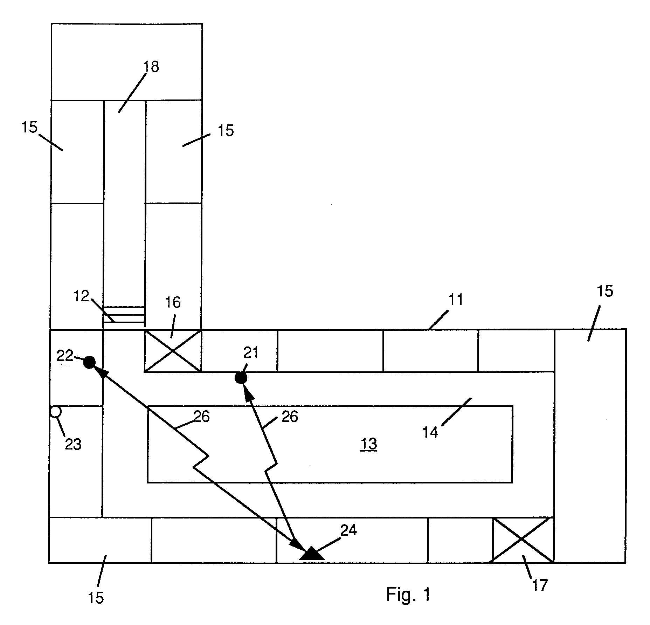

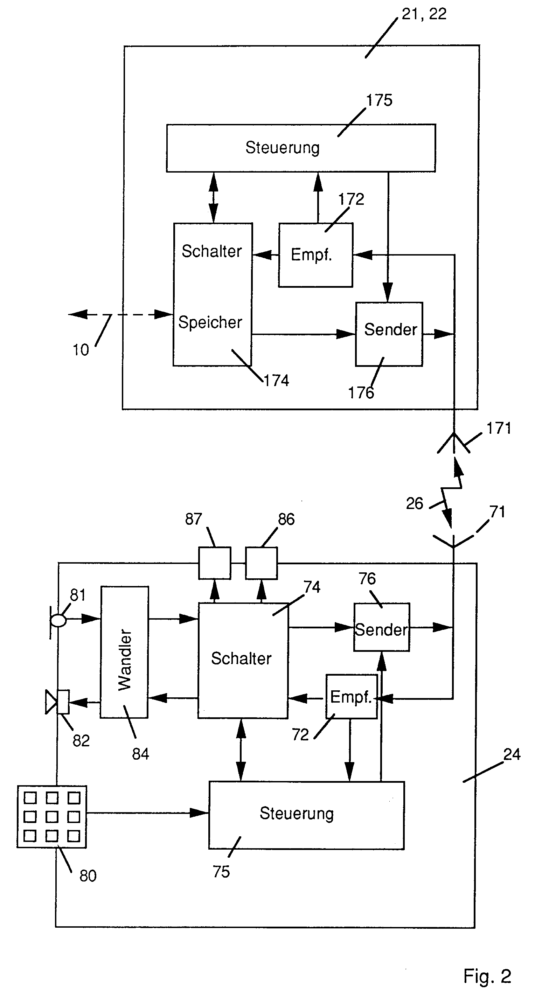

Im folgenden wird die Erfindung anhand von zwei Figuren beispielsweise näher beschrieben. Es zeigen: Fig. 1 - Grundriss eines Stockwerkes in einem Fabrikgebäude, Fig. 2 - Blockschaltbild einer Feststation und einer zugeordneten Mobilstation.

Fig. 1 zeigt den Grundriss eines L-förmigen Fabrikgebäudes 11 älterer Bauart. Das gezeigte beispielsweise Stockwerk liegt auf zwei unterschiedlichen Niveaus, die über eine Treppe 12 mit drei Stufe miteinander verbunden sind. Das Gebäude 11 besitzt im grösseren Flügel einen offenen Innenhof 13, zu dem ein ringförmiger Gang 14 hinweist. Die diversen zugeordneten Räume 15 sowie zwei Liftschächte 16, 17 weisen nach aussen. An die Treppe 12 schliesst ein weiterer, sackförmiger Gang 18 an, der ebenfalls von aussen liegenden Räumen 15 umgeben ist.

Es soll nun auf dem gezeigten, beispielsweisen Stockwerk des Gebäudes 11 ein System von digitalen Schnurlostelefonen installiert werden. Um die optimale Position für die notwendige Basisstation zu finden, werden etwa in der Mitte des Stockwerkes, d.h. etwa im Bereich der Verbindung der beiden Gänge 14 und 18 zwei Feststationen 21, 22 provisorisch aufgestellt. Hierbei wird ein Abstand von etwa 10 m eingehalten. Eine frei verschiebbare, zugeordnete Mobilstation 24 dient nun als manuell gesteuerte Mess- und Prüfstation. Diese Station 24 erlaubt die grundsätzliche und jederzeitige Kontaktaufnahme mit den beiden Feststationen 21, 22. Ist eine Kontaktaufnahme gewünscht, dann versuchen die jeweiligen Stationen einen gemeinsamen Kanal aufzubauen, über den ein Paketaustausch im Sinne der DECT-Norm erfolgen kann. Eine akustische und/oder optische Anzeige in der Mobilstation 24 dient zur Rückmeldung, ob und mit welcher Qualität der jeweilige Paketaustausch erfolgt. Der Paketaustausch bzw. jeder Kanal ist durch einen geknickten Pfeil 26 dargestellt.

Die Bedienperson kann nun mit Hilfe der Mobilstation 24 und unter Einnahme variierender Standorte die jeweiligen Möglichkeiten zur Verbindungsaufnahme und die nachfolgende Übertragungsqualität vergleichend testen. Hierdurch lässt sich auf relativ unkomplizierte Weise rasch ein Überblick gewinnen, wie weit die Funktionsbereiche der Feststationen 21 und 22 reichen und inwieweit sie sich überlappen. Ein gesuchter, optimaler Montageplatz für eine einzige Basisstation des zu installierend Systems digitaler Schnurlostelefone lässt sich damit einfach eruieren. Weiter ist bei grösseren Systemen mit mehreren Basisstationen feststellbar, wie gross die Überlappungszonen sind und ob in diesen die bei solchen Systemen erforderlichen Handover-Prozeduren einwandfrei funktionieren können. Die Verwendung von zwei Feststationen 21, 22 mit einem Abstand von bis zu 200 m und mehr bringt hierbei entscheidende Vorteile, da ständige Vergleiche möglich sind und ein Standortwechsel einer oder beider Feststationen 21, 22 kaum notwendig ist.

Als Mensch/Maschine-Schnittstelle an der Mobilstation 24 wurde weiter oben eine optische Anzeige genannt. Eine solche stellt jedoch nur eine grobe Orientierungshilfe dar. Für kompliziertere Untersuchungen können statt dessen alle Hilfsmittel der digitalen Datenverarbeitungstechnik eingesetzt werden, die mit einer Datenschnittstelle der Mobilstation 24 direkt oder mittelbar verbindbar sind. Hierdurch lassen sich die jeweiligen, untersuchten Systembedingungen übersichtlich und weitgehend automatisch darstellen.

Fig. 2 zeigt den Aufbau einer Feststation 21, 22 und der Mobilstation 24 in Form eines gemeinsamen Blockschaltbildes. Die Mobilstation 24 umfasst eine Antenne 71, eine Empfangseinheit 72, einen Schalter 74, eine Steuerung 75 und eine Sendeeinheit 76. Hierzu kommen als Mensch/Maschine-Schnittstellen eine Eingabetastatur 80, eine Sprechkapsel 81 und eine Hörkapsel 82 mit zugeordnetem AD/DA-Wandler 84 sowie eine optische Anzeige 86. Weiter ist als Maschine/Maschine-Schnittstelle eine Schnittstelleneinheit 87 vorgesehen, über die in der Mobilstation 24 anfallende Daten zur Auswertung an externe Geräte abgebbar sind. Weiter können über die Schnittstelleneinheit 87 von aussen her Befehle in die Mobilstation 24 eingegeben werden, die z.B. eine jeweilige Serie von Prüffunktionen automatisch auslösen. Schliesslich umfasst die Mobilstation 24 noch Mittel zur Beurteilung einer gewünschten exakten Fähigkeit zur Zusammenarbeit, zur Registrierung von Fehlern in den übertragenen Paketen, und zur Feststellung anderer Qualitäts- bzw. Fehlermerkmale. Diese Mittel basisieren im wesentlichen auf Bewertungsroutinen eines Mikrorechners und sind damit weitgehend in die Steuerung 75 integriert.

Die Feststation 21, 22 umfasst eine Antenne 171, eine Empfangseinheit 172, einen Schalter 174, eine Steuerung 175 und eine Sendeeinheit 176. Weiter sind Schlaufungsmittel vorgesehen, die über die Sendeeinheit 176 ankommende Signale, Pakete und/oder Daten unverändert wieder aussenden. Diese Mittel arbeiten eng mit dem Schalter 174, der Sendeeinheit 176 und der Steuerung 175 zusammen und treten daher im Blockschaltbild nicht speziell auf.

Die Mobilstation 24 und die Feststation 21, 22 stehen über ihre Antennen 71, 171 im potentiellen Funkkontakt, dargestellt durch einen Pfeil 26. Die im Falle einer Verbindung über die Antennen 71 bzw. 171 mit unterschiedlichen Übertragungsfrequenzen ankommenden Pakete werden durch die Empfangseinheit 72 bzw. 172 empfangen, synchronisiert und durch die Steuerung 75 bzw. 175 bezüglich ihrer Steuerdaten gelesen. Die Pakete werden sodann dem Schalter 74 bzw. 174 weitergegeben. Über die Sendeeinheit 76 bzw. 176 und die Antenne 71 bzw. 171 erfolgt nun eine Wiederaussendung oder es erfolgt eine Anzeige über z.B. die Hörkapsel 82 oder die Anzeige 86.

Mit der beschriebenen Vorrichtung können nun - im einfachsten Fall manuell gesteuert und von der Tastatur 80 der Mobilstation 24 ausgehend - beispielsweise folgende Messungen durchgeführt werden:
- Bestimmung der von den beiden Feststationen 21, 22 ausgehenden und der Mobilstation 24 empfangenen Funk-Feldstärken,
- Bestimmen der Qualität der von der Mobilstation 24 empfangenen Signale,
- Schlaufung von akustischen Signalen, die von der Mobilstation 24 erzeugt und ausgesandt werden, in einer der Feststationen 21, 22, und akustische Wiedergabe der geschlauften und von der Mobilstation 24 wieder empfangenen Signale,
- Erkennen und Identifizieren von Signalisierungssignalen,
- Erkennen und Identifizieren von Kanälen,
- Umschaltung der Verbindung von der Mobilstation 24 zur einen oder zur anderen Feststation 21, 22, usw.

Weiter kann über die Tastatur 80 die Übertragung gesammelter Daten über die Schnittstelleneinheit 87 ausgelöst werden.

Durch Verändern der Standorte der Mobilstation 24 und/oder der beiden Feststationen 21, 22 lässt sich - wie beschrieben - mit den genannten Messungen schnell und sicher die optimale Stelle finden, an der die Basisstation des zu installierenden Systems von Schnurlostelefonen plaziert werden sollte. Diese Stelle muss bezüglich aller genannten Parameter optimiert sein. In Fig. 1 liegt der optimale Installationsort beispielsweise an der Stelle 23, d.h. an einem relativ weit vom geometrischen Zentrum des Stockwerks entfernten Punkt an der Gebäudeaussenwand. Dies hat seine Ursache im metallischen Aufbau des Liftschachtes 16, der bei anderer Anordnung der Basisstation des Schnurlostelefonsystems zu grosse Gebiete des Stockwerks funkmässig abschirmen würde.

Wichtig ist, das die Mobilstation 24 und die beiden Feststationen 21, 22 sehr ähnlich wie die entsprechenden Stationen des zu installierenden Systems ausgebildet sind. d.h. wie die Handgeräte bzw. die Basisstationen. Dies gilt vor allem für alle die eigentlichen Funkeigenschaften betreffenden Parameter wie Sendeleistung, Antennencharakteristik, Gehäuseabmessungen, Anordnung der elektronischen Komponenten im Gehäuse usw. Es gilt aber auch für den inneren Aufbau der Stationen, da dies wesentliche Preisfolgen hat. Von Vorteil ist es daher, die für die beschriebenen Messungen zu benutzenden Stationen als Varianten der entsprechenden Stationen des vorgesehenen Systems auszubilden.

Als Variante ist zu erwähnen, dass statt der beschriebenen zwei Feststationen 21, 22 auch drei oder mehr Feststationen verwendbar sind, was jedoch wegen des Aufwandes nicht besonders vorteilhaft ist.

## Patentansprüche

1. Vorrichtung zum Bestimmen eines Montageplatzes für die Basisstation eines zu installierenden Systems digitaler Schnurlostelefone, wobei dieser Montageplatz in Bezug auf die Gesamtheit der zu berücksichtigenden Installationsparameter optimiert sein soll,
gekennzeichnet
- durch wenigstens zwei Feststationen (21, 22), die im Bereich des vorgesehenen Montageplatzes der Basisstation in einem vorgegebenen Abstand voneinander angeordnet sind,
- durch eine den Feststationen (21, 22) zugeordnete Mobilstation (24),
- wobei die Feststationen (21, 22) und die Mobilstation (24) im Sinne der DECT-Norm ausgebildet sind zum Aufbauen und Unterhalten wenigstens eines jeweiligen gemeinsamen Verbindungskanals zum zeitmultiplexierten, gegenseitigen Austauschen digitaler Pakete,
- wobei die Feststationen (21, 22) und die Mobilstation (24) gleiche Antennencharakteristiken wie die entsprechenden Stationen des zu installierenden Systems aufweisen,
- wobei die Mobilstation (24) wenigstens mit einer Eingabetastatur (80) und mit einer Ein-/Ausgabeeinheit (81, 82, 86) als Mensch/Maschine-Schnittstelle ausgerüstet ist, und
- wobei jede Feststation (21, 22) Schlaufungsmittel aufweist zum im wesentlich unveränderten Wiederaussenden empfangener Signale, die von der Mobilstation (24) ausgesandt wurden.

2. Vorrichtung nach Anspruch 1,
dadurch gekennzeichnet,
dass zwei Feststationen (21, 22) vorgesehen sind.

3. Vorrichtung nach Anspruch 1,
dadurch gekennzeichnet,
dass der Abstand zwischen den Feststationen (21, 22) etwa 10 m bis 200 m und mehr beträgt.

4. Vorrichtung nach Anspruch 1,
dadurch gekennzeichnet,
dass die Feststationen (21, 22) und die Mobilstation (24) zu wesentlichen Teilen baugleich mit den entsprechenden Stationen des zu installierenden Systems sind.

5. Vorrichtung nach Anspruch 1,
dadurch gekennzeichnet,
dass die Schlaufungsmittel durch einen gesteuerten Schalter (174) gebildet werden, der die über die Antenne (171) und die Empfangseinheit (172) von der Mobilstation (24) erhaltene Information unverändert über seine Sendeeinheit (176) und die Antenne (171) wieder aussendet.

6. Vorrichtung nach Anspruch 1,
dadurch gekennzeichnet,
dass die Mobilstation (24) eine Schnittstelleneinheit (87) aufweist zum Austausch von Daten mit externen Geräten.

7. Vorrichtung nach Anspruch 1,
dadurch gekennzeichnet,
dass die Mobilstation (24) Mittel aufweist zur Beurteilung der Qualität eines Übertragungskanals (26) zwischen der Mobilstation (24) und einer jeweiligen der Feststationen (21, 22).

8. Verfahren zum Bestimmen eines Montageplatzes für die Basisstation eines zu installierenden Systems digitaler Schnurlostelefone, wobei dieser Montageplatz in Bezug auf die Gesamtheit der zu berücksichtigenden Installationsparameter optimiert sein soll,
dadurch gekennzeichnet
- dass wenigstens zwei Feststationen (21, 22) im Bereich des vorgesehenen Montageplatzes der Basisstation in einem vorgegebenen Abstand voneinander fest angeordnet werden,
- dass von einer Mobilstation (24) aus, die an unterschiedlichen Orten plaziert wird, wiederholt Verbindungen mit den Feststationen (21, 22) aufgebaut werden,
- dass die Feststationen (21, 22) die von der Mobilstation (24) während der Verbindungen ausgesandte Information bzw. die empfangenen Daten im wesentlichen unverändert wiederaussenden,
- dass durch die oder in Kombination mit der Mobilstation (24) die von den Feststationen (21, 22) zurückempfangene Information bzw. die Daten bezüglich Fehlerfreiheit und/oder anderer Qualitäts-Kriterien ausgewertet werden, und
- dass schliesslich aufgrund der Auswertungen der Daten der Gesamtheit aller Verbindungen der jeweilige Montageplatz (23) bestimmt wird.

9. Verfahren nach Anspruch 8,
dadurch gekennzeichnet,
dass zwei Feststationen (21, 22) vorgesehen werden, und dass deren Abstand zwischen etwa 10 m bis 200 m und mehr gewählt wird.

10. Verfahren nach Anspruch 8,
dadurch gekennzeichnet,
- dass die Feststationen (21, 22) und die Mobilstation (24) gleiche Antennencharakteristiken wie die entsprechenden Stationen des zu installierenden Systems aufweisen und auch im sonstigen Aufbau mit letzteren weitgehend übereinstimmen, und
dass die Stationen (21, 22, 24) so angeordnet werden, wie es weitgehend dem täglichen Gebrauch des zu installierenden Systems entspricht.
